# EUROPÄISCHE PATENTANMELDUNG

(11) **EP 1 245 891 A1**
(43) Veröffentlichungstag der Anmeldung: **02.10.2002**
(21) Anmeldenummer: 01107515.7
(22) Anmeldetag: 26.03.2001
(51) Int. Cl.: F16L 33/02

(54) **Schlauchklemme**

(71) Anmelder: Hans Oetiker AG Maschinen- und Apparatefabrik, 8812 Horgen (CH)
(72) Erfinder: Oetiker, Hans, 8812 Horgen (CH); Meier, Ulrich, 8820 Wädenswil (CH)
(74) Vertreter: Strehl Schübel-Hopf & Partner

(57) **Zusammenfassung**

Zur Erzielung einer durchgehend lücken- und stufenlosen Innenfläche einer Schlauchklemme weist der innere Bandendabschnitt **11** zwei vom Bandende ausgehende und in Bandlängsrichtung verlaufende seitliche Ausschnitte **16** auf, in die im Spannzustand der Schlauchklemme in den äußeren Bandabschnitt **12** eingeformte, in Bandlängsrichtung verlaufende Sicken **18** eingreifen. Die Sicken **18** haben eine Höhe, die um 10 bis 20 % größer ist als die Dicke des Bandmaterials, und sind in ihrer Länge derart bemessen und so angeordnet, daß sie im Spannzustand der Schlauchklemme über den Ausschnitt **16** hinausgehen. Am freien Ende **21** gehen die Sicken **18** mit abnehmender Höhe in die glatte Innenfläche des äußeren Bandabschnitts **12** über.

## Beschreibung

### Beschreibung

Aus US-A-4,299,012 ist eine Schlauchklemme mit den im ersten Teil des Anspruchs 1 angegebenen Merkmalen bekannt. Diese Schlauchklemme hat sich wegen der Tatsache, daß ihre Innenfläche im gespannten Zustand frei von Lücken und Stufen ist und daher den Schlauch an sämtlichen Stellen seines Umfangs abstützt, auch zur Befestigung dünner, harter Schläuche an Rohrnippeln bewährt.

Bei der bekannten Schlauchklemme greift eine am inneren Bandende vorgesehene Zunge in einen im äußeren Bandteil vorhandenen Zungenkanal ein. Dieser Kanal ist durch zwei parallele, in Bandlängsrichtung verlaufende Schnitte gebildet, wobei die beiden Bandbereiche außerhalb dieser Schnitte an ihren dem äußeren Bandende zugewandten Ende und der zwischen den Schnitten gelegene mittlere Teil an seinem vom äußeren Bandende abgewandten Ende jeweils um ein der Dicke des Bandmaterials entsprechendes Maß nach innen gekröpft sind.

Im Spannzustand der Schlauchklemme endet die Zunge nahe der Kröpfung des zwischen den beiden Schnitten gelegenen mittleren Bandteils, während der an die Zunge anschließende Bereich der vollen Bandbreite nahe der Kröpfung am anderen Ende des Zungenkanals zu liegen kommt. In diesem Zustand ergeben sich zwar nahe den Kröpfungen jeweils Lücken; da die Lücken aber an keiner Stelle über die volle Bandbreite verlaufen, wird der Schlauch auch in diesen Bereichen von mindestens einem Teil der Bandbreite unterstützt, so daß Dichtigkeit zwischen Schlauch und Rohrnippel über den gesamten Umfang gewährleistet ist.

Die bekannte Schlauchklemme hat sich in der Praxis bewährt. Eine gewisse Schwierigkeit kann dann auftreten, wenn die im äußeren Bandabschnitt an zwei Stellen vorgesehenen Kröpfungen nicht exakt ausgeführt sind oder aufgrund unsachgemäßer Lagerung oder Handhabung deformiert wurden. Wird in einem solchen Fall der Zungenkanal zu flach, so ergibt sich eine Stufe am Zungenende; wird er zu tief, so entsteht eine Stufe im Bereich der Zungenwurzel.

Der Erfindung liegt die Aufgabe zugrunde, Nachteile, wie sie bei vergleichbaren Schlauchklemmen nach dem Stand der Technik auftreten, mindestens teilweise zu beseitigen. Eine speziellere Aufgabe kann darin gesehen werden, eine Schlauchklemme anzugeben, bei der eine lücken- und stufenlose Innenfläche auch bei weniger exakter Fertigung und trotz gewisser Verformung erreicht wird.

Die erfindungsgemäße Lösung dieser Aufgabe ist in Anspruch 1 gekennzeichnet. Die danach erreichte neue Art der Stufenlosigkeit kommt grundsätzlich ohne die beim Stand der Technik vorhandenen, quer zur Bandlängsrichtung verlaufenden Kröpfungen aus. Statt dessen arbeitet die Erfindung mit mindestens einer in Bandlängsrichtung verlaufenden Sicke; da diese nur einen Teil der Bandbreite einnimmt, ist im wesentlichen unabhängig von ihrer Höhe in jedem Bereich genügend Bandbreite vorhanden, um ausreichenden Dichtungsdruck auf den Schlauch zu erzeugen.

Die Weiterbildungen der Erfindung nach Anspruch 2 und 3 beziehen sich auf zwei verschiedene Möglichkeiten, eine gute Führung des inneren Bandendes beim Spannen der Schlauchklemme zu gewährleisten.

Die Gestaltung der Erfindung nach Anspruch 4 stellt sicher, daß der Übergang vom inneren Bandende zur Innenfläche des äußeren Bandabschnitts durch den radial nach innen ragenden Rücken der Sicke erfolgt, der sich wegen seiner geringen Breite leicht in das Schlauchmaterial eindrückt. Daher ist auch der Übergang am Ende der Sicke selbst unkritisch. Die Bemessung nach Anspruch 5 ist insofern zweckmäßig, als die Bandbreite des inneren Bandendabschnitts weitgehend erhalten bleibt. Mit der Gestaltung nach Anspruch 6 werden etwaige Probleme selbst bei harten und dünnen Schlauchmaterialien (z.B. Hytrel®)vermieden.

Anspruch 8 bezieht sich auf eine Maßnahme, die beim Schließen und Spannen der Schlauchklemme zwischen dem inneren Bandendabschnitt und dem äußeren Bandabschnitt auftretende Reibung zu reduzieren.

Bei der Gestaltung nach Anspruch 7 und 9 ist gewährleistet, daß die Sicke am weitesten nach innen springt und sich in das Schlauchmaterial eindrückt, was zu Erzielung der gewünschten Lücken- und Stufenlosigkeit am inneren Bandende zweckmäßig ist.

Die in den Ansprüchen 10 und 11 gekennzeichnete Weiterbildung der Erfindung verhindert, daß die am inneren Bandendabschnitt vorhandenen Gabelarme beim Schließen und Spannen der Schlauchklemme nach außen ausweichen.

Anspruch 12 bezieht sich auf eine Verstärkungsmaßnahme, mit der sich ein Ausreißen der Gabelarme insbesondere bei geringer Bandbreite vermeiden läßt.

Bei der Gestaltung der Erfindung nach den Ansprüchen 13 bis 16 wird die am inneren Bandende vorhandene Zunge nur teilweise zwischen Sicken und teilweise durch ein Fenster geführt. Dadurch wird es möglich, die Länge der Zunge und damit des Überlappungsbereichs zu verkürzen und insgesamt an Bandlänge einzusparen.

Vorteilhafte Ausführungsbeispiele der Erfindung werden nachstehend anhand der Zeichnung näher erläutert. Darin zeigt
- Figur 1: eine Schlauchklemme gemäß einem ersten Ausführungsbeispiel im ungespannten Zustand,
- Figur 2: eine Teilansicht der Schlauchklemme nach Figur 1 in Spannzustand,
- Figur 3: der Figur 2 ähnliche Teilansicht einer Schlauchklemme gemäß einem zweiten Ausführungsbeispiel,
- Figur 4: einen etwas vergrößerten Querschnitt längs der Linie IV-IV nach Figur 3.
- Figur 5: Teilansicht einer Schlauchklemme gemäß einem dritten Ausführungsbeispiel im ungespannten Zustand, und
- Figur 6: einen etwas vergrößerten Querschnitt durch den Überlappungsbereich der Schlauchklemme nach Figur 5 im Spannzustand.

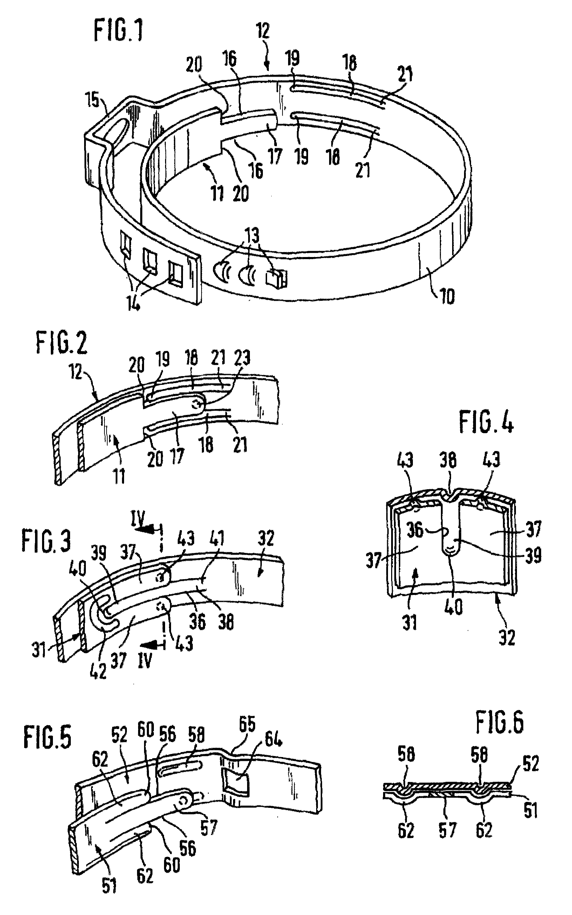

Die in Figur 1 und 2 gezeigte offenen Schlauchklemme ist aus einem Stahlband **10** einer Breite von beispielsweise 10 mm und einer Dicke von beispielsweise 1 mm gefertigt und zu der gezeigten Konfiguration mit einander überlappenden Bandenden vorgebogen. Dabei liegt der innere Bandendabschnitt **11** einem mit **12** bezeichneten äußeren Bandabschnitt gegenüber.

Um beispielsweise einen (nicht gezeigten) Schlauch gegenüber einem (ebenfalls nicht gezeigten) Rohrnippel abzudichten, wird die Schlauchklemme auf den zu dichtenden Schlauchbereich aufgebracht. Nach Einhängen von am inneren Bandteil vorgesehenen Haken **13** in nahe dem äußeren Bandende angeordnete Öffnungen **14** wird ein ebenfalls im äußeren Bandteil vorgesehenes insgesamt etwa U-förmiges Ohr **15** mittels einer Zange zusammengedrückt, so daß die Schlauchklemme sich in ihrem Durchmesser verkleinert und um den Schlauch gespannt wird.

Am inneren Bandendabschnitt **11** ist durch zwei in Bandlängsrichtung verlaufende seitliche Ausschnitte **16** eine Zunge **17** ausgebildet. Bei der angenommenen Bandbreite von 10 mm hat die Zunge eine Breite von beispielsweise 4 mm. Ihre Länge ist vorzugsweise etwas größer als das Maß, um das das Ohr **15** beim Spannen verengt und der Umfang der Schlauchklemme verkürzt wird.

In den gegenüberliegenden äußeren Bandabschnitt **12** sind zwei seitliche, in Bandlängsrichtung verlaufende, radial nach innen springende Sicken **18** eingeformt. Die Sicken **18** sind nahe den äußeren Bandkanten angeordnet und haben jeweils eine Breite von etwa 1/10 bis höchstens etwa 1/4 der Bandbreite. Das Maß, um das die Sicken **18** gegenüber der Innenfläche des Bandes **10** nach innen springen, ist um etwa 10 bis 20 % größer als die Dicke des Bandmaterials und damit der Zunge **17.** Die Länge der Sicken **18** in Umfangsrichtung der Schlauchklemme ist größer als die Länge der Zunge **17.**

Wie in der Teilansicht der Figur 2 dargestellt, sind die Sicken **18** in dem äußeren Bandabschnitt **12** so angeordnet, daß im Spannzustand der Schlauchklemme ihre dem äußeren Bandende zugewandten Enden **19** nahe den Enden **20** der am inneren Bandendabschnitt **11** vorgesehenen seitlichen Ausschnitte **16** zu liegen kommen. In diesem Zustand laufen die Sicken **18** in Bandlängsrichtung über das Ende der Zunge **17** hinaus.

Der sich an den inneren Enden **21** der Sicken **18** ergebende Übergang zur glatten Innenfläche des Bandes **10** beeinträchtigt die Dichtigkeit der Schlauch/Rohrnippel-Verbindung nicht, da sich die Sicken **18** wegen ihrer geringen Breite in das Schlauchmaterial eindrücken und außerdem zwischen den Sicken **18** genügend Bandbreite zur Verfügung steht, um den Schlauch auch in diesem Übergangsbereich effektiv gegen den Rohrnippel zu drücken.

Darüberhinaus sind die Sicken **18** so gestaltet, daß sie von der Stelle, die in dem in Figur 2 dargestellten Spannzustand dem freien Ende der Zunge **17** entspricht, bis zu ihrem Ende **21** in ihrer Höhe abnehmend stufenlos in die glatte Innenfläche des Bandes **10** übergehen.

Bei dem in Figur 3 gezeigten Ausführungsbeispiel ist der innere Bandendabschnitt **31** durch einen in der Längsmittellinie des Bandes verlaufenden Schlitz **36** gabelartig geteilt, während in den äußeren Bandabschnitt **32** eine ebenfalls in Bandlängsrichtung verlaufende mittlere Sicke **38** eingeformt ist. In dem gezeigten Ausführungsbeispiel hat der Schlitz **36** eine Breite von etwa 2 mm, so daß die seitlichen Gabelteile **37** jeweils eine Breite von etwa 4 mm haben. An ihren freien Enden sind die Gabelteile **37** ähnlich wie die Zunge **23** verrundet.

Wie bei dem Ausführungsbeispiel nach Figur 1 und 2 ist die Länge des Schlitzes **36** etwas größer als das Maß, um das das Ohr **15** verengt wird, und die mittlere Sicke **38** ist in ihrer Länge so bemessen und in dem äußeren Bandabschnitt **32** so angeordnet, daß in dem in Figur 3 gezeigten Spannzustand der Schlauchklemme das äußere Ende **39** der Sicke **38** nahe dem inneren Ende **40** des Schlitzes **36** zu liegen kommt, während sich ihr anderes Ende **41** über die Enden der Gabelteile **37** hinaus erstreckt. Aus den oben genannten Gründen ist der Übergang am Ende **41** der Sicke **38** in die glatte Innenfläche des äußeren Bandabschnitts **32** für die Dichtigkeit der Schlauch /Rohrnippel-Verbindung unkritisch. Wie beim ersten Ausführungsbeispiel weist die Sicke **38** eine von den Enden der Gabelteile **37** bis zu ihrem eigenen Ende **41** abnehmende Höhe auf.

Wie (nur) in Figur 3 ferner gezeigt, ist in den inneren Bandendabschnitt **31** eine das innere Ende **40** des Schlitzes **36** umgreifende, radial nach innen springende, insgesamt etwa halbmondförmige Verstärkungssicke **42** eingeformt, die ein Ausbrechen der Gabelteile **37 -** insbesondere bei geringer Breite des Bandes **10 -** verhindert.

In der Schnittdarstellung der Figur 4 ist zu erkennen, daß der äußere Bandabschnitt **32** im Bereich der Gabelteile **37** radial auswärts gewölbt ist. Die auf beiden Seiten der mittleren Sicke **38** gelegenen Teile des äußeren Bandabschnitts **32** steigen somit in Richtung der Sicke **38** an und bewirken, daß die Gabelteile **37** auf die Sicke **38** zu geführt und dadurch gehindert werden, nach außen auszuweichen.

Wie ferner in Figur 3 und 4 gezeigt, ist am Ende jedes Gabelteils **37** eine dem äußeren Bandabschnitt **32** zugewandte punktförmige Ausprägung **43** vorgesehen, die die Reibung zwischen dem inneren Bandendabschnitt **31** und dem äußeren Bandabschnitt **32** beim Schließen und Spannen der Schlauchklemme verringert. Um der Höhe dieser Ausprägungen **43** Rechnung zu tragen, ist die Höhe der mittleren Sicke **38** etwa 10 bis 20 % größer als die Summe aus der Materialdicke der Gabelteile **37** und der Höhe der Ausprägungen **43.**

Eine ähnliche punktförmige Ausprägung **23** ist in dem Ausführungsbeispiel nach Figur 2 am Ende der Zunge **17** vorgesehen. Auch in diesem Fall ist die Höhe der seitlichen Sicken **18** um etwa 10 bis 20 % größer als die Summe aus der Dicke des Bandmaterials und der Höhe der Ausprägung **23.**

Das in Figur 5 und 6 gezeigte Ausführungsbeispiel unterscheidet sich von dem nach Figur 1 und 2 dadurch, daß die am inneren Bandendabschnitt **51** vorgesehene Zunge **57** und die in den äußeren Bandabschnitt **52** eingeformten seitlichen Sicken **58** in ihrer Länge nur etwa der Hälfte des Maßes entsprechen, um die die Schlauchklemme beim Schließen und Spannen in Umfangsrichtung verkürzt wird.

Daher findet eine Führung zwischen der Zunge **57** und den Sicken **58** nur über im wesentlichen die Hälfte des beim Spannen auftretenden Verschiebungsweges statt. In der zweiten Hälfte des Verschiebungsweges greifen die Sicken **58** in im inneren Bandendabschnitt **51** ausgebildete seitliche Sicken **62** ein, die unmittelbar an den Enden **60** der die Zunge **57** bildenden seitlichen Ausschnitte **56** beginnen und an diesen Enden **60** offen sind. In diesem zweiten Teil des Verschiebungsweges tritt das freie Ende der Zunge **57** in ein Fenster **64** ein, das an einer quer zur Bandlängsrichtung verlaufenden, vom äußeren Bandende aus gesehen nach innen springenden Stufe **65** beginnt. Die Höhe der Stufe **65** entspricht der Dicke des Bandmaterials.

Aus den oben erläuterten Gründen ist es zweckmäßig, die Sicken **62** an ihren von der Zunge **57** abgewandten Enden mit abnehmender Höhe stufenlos in das glatte Innenfläche des inneren Bandabschnitts **51** übergehen zu lassen.

Die geringe Länge der Zunge **57** bedeutet, daß auch nur ein entsprechend kurzes Stück durch das Fenster **64** nach außen ragt; gleichzeitig wird die zur Erzeugung der lücken- und stufenlosen Innenfläche der Schlauchklemme benötigte Bandlänge entsprechend kurz und damit insgesamt an Bandlänge eingespart.

Bei den oben erläuterten Schlauchklemmen handelt es sich um sogenannte "Ohr"-Klemmen. Die Erfindung ist auch bei anderen Schlauchklemmen, insbesondere auch bei "ohrlosen" Klemmen, die auch als "Spannschellen" bezeichnet werden, anwendbar.

### Bezugszeichenliste

- **10**: Stahlband
- **11**: innerer Bandendabschnitt
- **12**: äußerer Bandabschnitt
- **13**: Haken
- **14**: Öffnungen
- **15**: Ohr
- **16**: seitliche Ausschnitte
- **17**: Zunge
- **18**: seitliche Sicken
- **19**: äußere Enden der Sicken 18
- **20**: Enden der Ausschnitte 16
- **21**: innere Enden der Sicken 18
- **23**: Ausprägung
- **31**: innerer Bandendabschnitt
- **32**: äußerer Bandabschnitt
- **36**: Schlitz
- **37**: Gabelteile
- **38**: mittlere Sicke
- **39**: äußeres Ende der Sicke 38
- **40**: inneres Ende des Schlitzes 36
- **41**: inneres Ende der Sicke 38
- **42**: Verstärkungssicke
- **43**: Ausprägung
- **51**: innerer Bandendabschnitt
- **52**: äußerer Bandabschnitt
- **56**: seitliche Ausschnitte
- **57**: Zunge
- **58**: seitliche Sicken
- **60**: Enden der Ausschnitte 56
- **62**: seitliche Sicken
- **64**: Fenster
- **65**: Stufe

## Patentansprüche

1. Schlauchklemme aus einem offenen Band **(10)** mit einander überlappenden Bandenden, wobei der innere Bandendabschnitt **(11, 31, 51)** und der im Spannzustand der Schlauchklemme ihn überdeckende Bereich des äußeren Bandabschnitts **(12, 32, 52)** so gestaltet sind, daß sich eine durchgehend lücken- und stufenlose Innenfläche der gespannten Schlauchklemme ergibt,
**dadurch gekennzeichnet, daß** der innere Bandendabschnitt **(11, 31, 51)** einen vom Bandende ausgehenden und in Bandlängsrichtung verlaufenden Ausschnitt **(16, 36, 56)** und der äußere Bandabschnitt **(12, 32, 52)** in dem diesem Ausschnitt **(16, 36, 56)** entsprechenden Bereich eine in Bandlängsrichtung verlaufende Sicke **(18, 38, 58)** aufweist, deren Höhe der Dicke des Bandmaterials entspricht.

2. Schlauchklemme nach Anspruch 1, wobei der Ausschnitt ein den inneren Bandendabschnitt **(11, 31, 51)** gabelartig teilender Schlitz **(36)** ist und die Sicke **(38)** in der Längsmittellinie des äußeren Bandabschnitts **(32)** verläuft.

3. Schlauchklemme nach Anspruch 1, wobei der innere Bandendabschnitt **(11, 51)** durch zwei seitliche Ausschnitte **(16, 56)** zungenartig gestaltet ist und der äußere Bandabschnitt **(12, 52)** zwei seitliche Sicken **(18, 58)** aufweist.

4. Schlauchklemme nach einem der vorhergehenden Ansprüche, wobei die bzw. jede Sicke **(18, 38)** im Spannzustand in Bandlängsrichtung über den betreffenden Ausschnitt **(16, 36)** hinausgeht.

5. Schlauchklemme nach einem der vorhergehenden Ansprüche, wobei die Breite der bzw. jeder Sicke **(18, 38, 58)** 1/4 bis 1/10 der Bandbreite beträgt.

6. Schlauchklemme nach einem der vorhergehenden Ansprüche, wobei das vom äußeren Bandende abgewandte Ende **(21, 41)** der bzw. jeder Sicke **(18, 38)** mit abnehmender Höhe in die Innenfläche des Bandes **(10)** übergeht.

7. Schlauchklemme nach einem der vorhergehenden Ansprüche, wobei die Höhe der bzw. jeder Sicke **(18, 38, 58)** um 10 bis 20 % größer ist als die Dicke des Bandmaterials.

8. Schlauchklemme nach einem der Ansprüche 1 bis 6, wobei nahe dem bzw. jedem freien Ende des inneren Bandendabschnitts **(11, 31)** eine dem äußeren Bandabschnitt **(12, 32)** zugewandte punktförmige Ausprägung **(23, 43)** vorgesehen ist.

9. Schlauchklemme nach Anspruch 8, wobei die Höhe der Sicke **(18, 38, 58)** um 10 bis 20 % größer ist als die Summe aus der Dicke des Bandmaterials und der Höhe der punktförmigen Ausprägung **(23, 43).**

10. Schlauchklemme nach Anspruch 2, wobei die auf beiden Seiten der mittleren Sicke **(38)** gelegenen Teile des äußeren Bandabschnitts **(32)** in dem Bereich, in dem sich die Gabelenden **(37)** des inneren Bandendabschnitts **(31)** beim Spannen der Schlauchklemme bewegen, quer zur Bandlängsrichtung von den Bandkanten zu der Sicke **(38)** ansteigen.

11. Schlauchklemme nach Anspruch 10, wobei der äußere Bandabschnitt **(32)** im Bewegungsbereich der Gabelenden **(37)** quer zur Bandlängsrichtung radial nach außen gewölbt ist.

12. Schlauchklemme nach einem der Ansprüche 2, 10 und 11, wobei der innere Bandendabschnitt **(31)** eine das innere Ende **(40)** des Schlitzes **(36)** umgreifende Verstärkungssicke **(42)** aufweist.

13. Schlauchklemme nach Anspruch 3, wobei der äußere Bandabschnitt **(52)** ein Fenster **(64)** zum Durchtritt der Zunge **(57)** im Spannzustand der Schlauchklemme aufweist.

14. Schlauchklemme nach Anspruch 13, wobei der innere Bandendabschnitt **(51)** in dem in Bandlängsrichtung an die seitlichen Ausschnitte **(56)** angrenzenden Bereich zwei Sicken **(62)** aufweist, in die im Spannzustand der Schlauchklemme die beiden Sicken **(58)** des äußeren Bandabschnitts **(52)** eingreifen.

15. Schlauchklemme nach Anspruch 14, wobei das vom inneren Bandende abgewandte Ende jeder Sicke **(62)** mit abnehmender Höhe in die Innenfläche des Bandes **(10)** übergeht.

16. Schlauchklemme nach Anspruch 14 oder 15, wobei der äußere Bandabschnitt **(52)** nahe seiner dem äußeren Bandende zugewandten Kante des Fensters **(64)** eine quer zur Bandlängsrichtung verlaufende, vom äußeren Bandende aus gesehen nach innen einspringende Stufe **(65)** aufweist, deren Höhe der Dicke des Bandmaterials entspricht.
